(19) Europäisches Patentamt
European Patent Office
Office européen des brevets

(11) **EP 3 641 219 A1**

(12) **EUROPEAN PATENT APPLICATION**

(43) Date of publication:
**22.04.2020 Bulletin 2020/17**

(51) Int Cl.:
***H04L 9/32*** *(2006.01)*

(21) Application number: **19156421.0**

(22) Date of filing: **11.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.10.2018 EP 18201029**

(71) Applicant: **Siemens Aktiengesellschaft**
**80333 München (DE)**

(72) Inventors:
• **De Santis, Fabrizio**
**80634 München (DE)**
• **Fries, Steffen**
**85598 Baldham (DE)**

Remarks:
Amended claims in accordance with Rule 137(2) EPC.

(54) **PUF BASED SECURING OF DEVICE UPDATE**

(57)     For securing an update of a device (100), the device (100) provides a physical unclonable function (PUF). The device (100) generates a device-specific key by the PUF and encrypts a secret key by calculating an invertible cryptographic function, e.g., an exclusive-or, XOR, combination, of the secret key and the device-specific key generated by the PUF. The device (100) stores encrypted secret key. When receiving an update, the device (100) reconstructs the secret key from the stored encrypted secret key, by utilizing the device-specific key generated by the PUF to invert the cryptographic function of the secret key and the device-specific key, and decrypts the update with the reconstructed secret key.

FIG 1

EP 3 641 219 A1

**Description**

The present disclosure relates to devices, systems and methods for enabling secure updating of a device.

For various programmable devices, like for example industrial control devices, industrial field devices, IoT (Internet of Things) gateways or other types of IoT devices, it is known to utilize cryptographic keys for device authentication, for protecting integrity of stored data and program code, for protecting confidentiality by encrypting stored data, or for verifying data provided to or from the device. One example of data which may be provided to the device is data including an update, e.g., of program code or parameters stored in the device.

The cryptographic keys may be used in various processes during operation of the device. Storage of the cryptographic keys and access to the cryptographic keys is a critical aspect and may for example be implemented on the basis of a trust anchor or a hardware security module (HSM). In particular, it is desired that a secret cryptographic key is stored in a secure manner, so that it is not accessible to an attacker.

If storage of a secret cryptographic key on the device is in principle possible, there may nonetheless be the problem that a secure storage which provides protection against attacks is results in high cost and/or complex implementation of the device. Further, if for example a device-series specific cryptographic key is used, which may be desirable in the case of firmware updates, extracting of the cryptographic key from one device may result in a vulnerability of all other devices of the same series.

It is also known to utilize a physical unclonable function (PUF) to avoid storage of a cryptographic key in a conventional memory, manual entering of the cryptographic key, or transferring of the cryptographic key to the device. By means of a PUF, a cryptographic key may be generated locally as needed. A PUF is typically implemented as an integrated circuit having a behavior, in particular in terms of output values, that cannot be predicted, influenced, or analyzed based on the circuit design or inspection of the circuit. A PUF may for example be based on physical variations which are unavoidable during manufacturing of a semiconductor circuit. This has the effect that the function of a certain PUF cannot be reproduced in another circuit having the same circuit design. When using a PUF for generating a cryptographic key, an individual key will be provided for each device.

In some application scenarios, it is typical to utilize devices with limited computational power and/or limited energy resources, such as embedded devices, like sensors, and actuators, or SoCs. In such scenarios, utilization of more complex public key management strategies may not be feasible, and symmetric cryptographic algorithms may need to be utilized, e.g., to provide an encrypted firmware update or configuration update to the devices. The cryptographic key utilized in the symmetric cryptographic algorithm should not be accessible to an attacker, in particular when utilizing a series specific cryptographic key which is the same for all devices of a series.

Accordingly, there is a need for technologies that allow for efficiently managing an encrypted update of a device.

In view of the above need, the present disclosure provides a device as defined in claim 1 and a method as defined in claim 9. The dependent claims define further embodiments.

According to an embodiment, a device is provided. The device may have a processor-based part, e.g., based on one or more processors configured to execute program code stored in a memory of the device, and a dedicated circuit part, e.g., based on an FPGA (Field Programmable Gate Array) or other type of dedicated circuitry, like hardware peripherals, cryptoprocessors, or other processors. The device is configured to:

- provide a physical unclonable function (PUF) in the the device,
- generate a device-specific key by the PUF,
- encrypt a secret key by calculating an invertible cryptographic function, e.g., an exclusive-or (XOR) combination or a more complex invertible cryptographic function based on block-ciphers or stream-ciphers, of the secret key and the device-specific key generated by the PUF,
- store the encrypted secret key,
- receive an update encrypted with the secret key,
- reconstruct the secret key from the stored encrypted secret key by utilizing the device-specific key generated by the PUF to invert the cryptographic function of the secret key and the device-specific key, and
- decrypt the update with the reconstructed secret key.

The device thus allows for efficiently utilizing a PUF for securing the secret key, because an attacker managing to read out the device will only gain access to the encrypted secret key, but not to the secret key itself. Further, the secret key or a key derived from this secret key, e.g., using a key derivation function like HKDF or keyed hash methods like HMAC-SHA 256, can be used in a symmetric encryption algorithm and can also be shared with other devices, e.g., devices of the same series or other group using a similar configuration. This is for example beneficial if the device is a low complexity and/or low cost device, e.g., an embedded device.

In an embodiment of the device, the PUF is configured to provide the device-specific key as a response to a challenge input, and the device is configured to store the challenge input in the device, in a separate memory, or on a server. This allows for efficiently controlling the generation of the device-specific key, without compromising security.

In an embodiment of the device, the device is configured to:

- store the challenge input in a memory of the dedicated circuit part of the device, and
- store an index referring to the stored challenge input in a further memory of the processor-based part of the device, in a separate memory, or on a server.

In this way, it can be avoided that the challenge input itself is transferred, thereby further enhancing the security level of the secret key.

In an embodiment of the device, the PUF is configured to generate a plurality of device-specific keys in response to receiving a corresponding different challenge inputs, for encrypting a corresponding one of a plurality of secret keys by calculating an invertible cryptographic function, e.g., XOR combination or more complex invertible cryptographic function based on block-ciphers or stream-ciphers, of the secret key and the device-specific key. In this way, the same PUF can be utilized in an efficient manner for securing the plurality of secret keys.

In an embodiment of the device, the device is configured to provide a plurality of PUFs, each for encrypting a corresponding one of a plurality of secret keys by calculating an invertible cryptographic function, e.g., XOR combination or more complex invertible cryptographic function based on block-ciphers or stream-ciphers, of the secret key and a corresponding device-specific key generated by the PUF. In this way, a high level of security may be provided independently for the plurality of secret keys.

In an embodiment of the device, the dedicated circuit part of the device is configured to decrypt the update with the reconstructed secret key. In this way, security of the update can be further enhanced by avoiding that the processor-based part of the device has access to the secret key when decrypting the update.

In an embodiment of the device, the dedicated circuit part of the device is configured to verify integrity of the update. In this way, a risk of a manipulation of the update can be further reduced.

In an embodiment of the device, the update is signed with a digital signature and the processor-based part of the device is configured to verify the digital signature. In this way, security of the update can be enhanced by a check in the processor-based part, while decryption of the update may be performed in the dedicated circuit part. Accordingly, the processor-based part of the device may efficiently support use security functions provided by the dedicated circuit part.

In an embodiment of the device, the update is authenticated with a Message Authentication Code (MAC) or using authenticated encryption, e.g., an AEAD (authenticated encryption with associated data) algorithm like AES-GCM (Advanced Encryption Standard Galois/Counter Mode). In this way, the integrity and authenticity of the update can be further verified. This can be accomplished by the processor-based part or by the dedicated circuit part. In this way, a risk of a manipulation of the update can be further reduced.

According to a further embodiment, a method of updating a device is provided. The device may have a processor-based part and a dedicated circuit part. The device may for example correspond to the device of any the above embodiments. The method comprises:

- generating a device-specific key by a physical unclonable function (PUF), provided in the device,
- encrypting a secret key by calculating an invertible cryptographic function, e.g., XOR combination or more complex invertible cryptographic function based on block-ciphers or stream-ciphers, of the secret key and the device-specific key generated by the PUF,
- storing the encrypted secret key,
- receiving an update encrypted by the secret key,
- reconstructing the secret key from the stored encrypted secret key by utilizing the device-specific key generated by the PUF to invert the cryptographic function of the secret key and the device specific key, and
- decrypting the update with the reconstructed secret key.

The method thus allows for efficiently utilizing a PUF for securing the secret key, because an attacker managing to read out the device will only gain access to the encrypted secret key, but not to the secret key itself. Further, the secret key can be used in a symmetric encryption algorithm and can also be shared by other devices, e.g., devices of the same series or other group using a similar configuration. This is for example beneficial if the device is a low complexity and/or low cost device, e.g., an embedded device.

In an embodiment of the method, the PUF provides the device-specific key as a response to a challenge input, and the device stores the challenge input in the device or on a server. This allows for efficiently controlling the generation of the device-specific key, without compromising security.

In an embodiment of the method, the device stores the challenge input in a memory of the dedicated circuit part of the device and stores an index referring to the stored challenge input in a further memory of the processor-based part of the device, in an external memory, or on a server. In this way, it can be avoided that the challenge input itself is transferred, thereby further enhancing the security level of the secret key.

In an embodiment of the method, the PUF generates a plurality of device-specific keys in response to receiving a corresponding different challenge inputs, for encrypting a corresponding one of a plurality of secret keys by calculating an invertible cryptographic function, e.g., XOR combination or more complex invertible cryptographic function based on block-ciphers or stream-ciphers, of the secret key and the device-specific key. In this way, the same PUF can be utilized in an efficient manner for securing the plurality of secret keys.

In an embodiment of the method, the device provides a plurality of PUFs, each for encrypting a corresponding one of a plurality of secret keys by calculating an invertible cryptographic function, e.g., XOR combination or more complex invertible cryptographic function based on block-ciphers or stream-ciphers, of the secret key and a corresponding device-specific key generated by the PUF. In this way, a high level of security may be provided independently for the plurality of secret keys.

In an embodiment of the method, the dedicated circuit part of the device decrypts the update with the reconstructed secret key. In this way, security of the update can be further enhanced by avoiding that the processor-based part of the device has access to the secret key when decrypting the update.

In an embodiment of the method, the dedicated circuit part of the device verifies the integrity of the update. In this way, a risk of a manipulation of the update can be further reduced.

In an embodiment of the method, the update is signed with a digital signature and the processor-based part of the device verifies the digital signature. In this way, security of the update can be enhanced by a check in the processor-based part, while decryption of the update may be performed in the dedicated circuit part. Accordingly, the processor-based part of the device may efficiently support security functions provided by the dedicated circuit part.

In an embodiment of the method, the update is authenticated with a MAC or using authenticated encryption, e.g., an AEAD algorithm like AES-GCM. In this way, the integrity and authenticity of the update can be further verified. This can be accomplished by the processor-based part or by the dedicated circuit part. In this way, a risk of a manipulation of the update can be further reduced.

In the following, embodiments of the present disclosure will be described in more detail and with reference to the accompanying drawings.

Fig. 1 schematically illustrates an example of processes for preparation of a device for performing an update according to an embodiment of the present disclosure.

Fig. 2 schematically illustrates an example of processes of an update of a device according to an embodiment of the present disclosure.

Fig. 3 schematically illustrates dedicated hardware circuitry of a device according to an embodiment of the present disclosure.

Fig. 4 shows a flowchart for schematically illustrating a method according to an embodiment of the present disclosure.

It is noted that in the following detailed description of embodiments the accompanying drawings are only schematic and that the illustrated elements are not necessarily shown to scale. Rather, the drawings are intended to illustrate functions and cooperation of components. Here, it is to be understood that any connection or coupling of functional blocks, devices, components, or other physical or functional elements could also be implemented by an indirect connection or coupling, e.g., via one or more intermediate elements. A connection or coupling of elements or components can for example be implemented by a wire-based, a wireless connection, and/or a combination of a wire-based and a wireless connection. As a general rule, functions as illustrated below can be implemented by dedicated hardware, by firmware and/or software installed on programmable hardware, and/or by a combination of dedicated hardware and firmware or software.

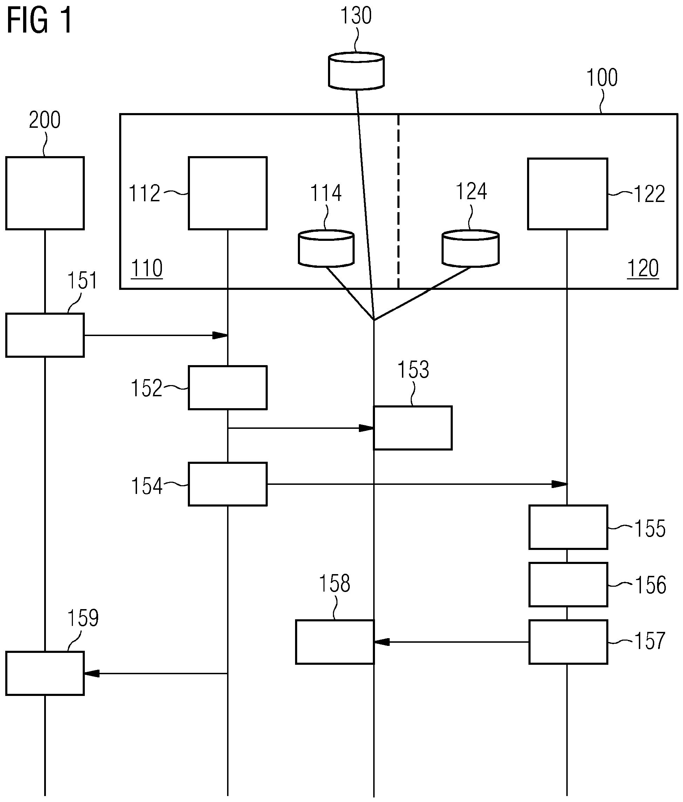

Fig. 1 schematically illustrates an example of processes for preparing a device 100 for an update. The device 100 has a processor-based part 110 and a dedicated circuit part 120. The device 100 may for example be an embedded device, e.g., an SoC (System on a Chip). The device 100 could for example be an IoT an IoT gateway, an IoT sensor, an IoT actuator, or other type of IoT device. Further, the device 100 could be an industrial control or field device. The update may correspond to a firmware update or a software update, e.g., involving updating of the program code for operating the processor 112. Alternatively or in addition, the update may correspond to a configuration update, e.g., involving updating of one or more parameters or other data for controlling operation of the device 100.

In the illustrated example, the processor-based part 110 includes a processor 112, e.g., a CPU (Central Processing Unit) and a memory 114. The processor-based part 110 may be programmed by storing program code to be executed by the processor 112 in the memory 114. Such program code may for example also include an operating system of the device 100, e.g., based on Linux. Further, such program code may also implement various specific functionalities of the device 100, which may depend on the specific application the device 100 is designed for. The dedicated circuit part 120 includes an FPGA (Field Programmable Gate Array) 122 which in the illustrated example implements a physical unclonable function (PUF), a random number generator (RNG), and an encryption/decryption function. Further, the dedicated circuit part 120 may include a memory 124. Further, it is noted that the dedicated circuit part 120 could also include other components like peripherals, interfaces, cryptoprocessors, or other processors.

As further illustrated, the device 100 may be provided with an off-chip memory 130. The off-chip memory 130 may be provided separately from the device 100, e.g., on a separate chip 130. Further, the off-chip memory 130 could be provided as a further part of the device 100, but on a chip separate from the processor-based part 110 and the dedicated circuit part 120.

The PUF may be implemented as an integrated circuit having a behavior, in particular in terms of output values that cannot be predicted, influenced, or analyzed based on the circuit design or inspection of the circuit. The PUF may for example be based on physical variations which are unavoidable during manufacturing of a semiconductor circuit. This has the effect that the function of the PUF cannot be reproduced in another circuit having the same circuit design. Here, it is noted also that the immediate output of the PUF may be unstable stable. For example, some output bits may flip over different invocations of the PUF. For this reason, the device 100 may implement an error-correction mechanism, e.g., based on an Error-Correction Code (ECCs), to stabilize the PUF output to a steady and reproducible value. For example, such error-correction mechanism could be implemented in the dedicated circuit part as part of an output section of the PUF.

As illustrated by block 151, initially a secret key K is provided to the device 100. The secret key K may be provided together with an index identifying the secret key K, in the following referred to as IndexID. As illustrated, the secret key K may be provided by a server 200. The server 200 may be operated by a manufacturer of the device 100 or by an operator of the device 100. The secret key K may be a series-specific key and also be utilized for other devices from the same series as the device 100.

As illustrated by block 152, the processor-based part 110 of the device 100 may then generate a challenge. For this purpose, the processor-based part 110 of the device 100 may utilize the RNG provided in the dedicated circuit part 120 of the device 100.

As illustrated by block 153, the device 100 may then store the challenge, using the IndexID as a reference to the stored challenge, e.g., in a lookup table. The device 100 may store the challenge in the memory 114 of the processor-based part 110 or, if present, in the memory 124 of the dedicated circuit part 120, or, if present, in the off-chip memory 130.

As illustrated by block 154, the processor-based part 110 of the device 100 may then provide the secret key K and the challenge to the dedicated circuit part 120 of the device 100. As a response to the challenge, the PUF provided in the dedicated circuit part 120 of the device 100 generates a device-specific key $K_P$.

As illustrated by block 155, the dedicated circuit part 120 of the device 100 then encrypts and thereby obfuscates the secret key K with the device-specific key $K_P$ generated by the PUF. This is accomplished by calculating an exclusive-or (XOR) combination of the secret key K and the device-specific key $K_P$. That is to say, an encrypted key $K_E$ is calculated according to:

$$K_E = K \; XOR \; K_P. \qquad\qquad (1)$$

As illustrated by blocks 156 and 157, the device 100 then stores the encrypted key $K_E$, using the IndexID as a reference to the stored encrypted key $K_E$. This may be accomplished in the memory 114 of the processor-based part 110 or, if present, in the memory 124 of the dedicated circuit part 120 or, if present, in the off-chip memory 130. The device-specific key $K_P$ is generated on-the fly and not persistently stored in the device 100.

As illustrated by block 158, the secret key K and the IndexID may also be stored externally, e.g., at the server 200.

The processes of Fig. 1 may be performed in a secure environment and are used to provide the device 100 with the secret key K, for later use in performing a secure update. The processes of Fig. 1 may also be referred to as "imprinting". If the device 100 needs to be provided with multiple secret keys $K_0$, ..., $K_{N-1}$, (with N denoting the number of the secret keys) the processes of Fig. 1 may be performed for each of the multiple secret keys $K_0$, ..., $K_{N-1}$. Multiple secret keys may for example be useful if multiple cryptographic algorithms are used on the device 100, or in scenarios where key validity is limited for some reason. For example, it may happen that the first secret key $K_0$ is compromised and can't be trusted anymore. In that case, the second secret key $K_1$ can then be used for the next update, and so forth.

According to one variant, the same PUF in the dedicated circuit part 120 may be used for generating multiple device-specific keys $K_{P0}$, ..., $K_{PN-1}$, each of these multiple device-specific keys $K_{P0}$, ..., $K_{PN-1}$ being used for encrypting a corresponding one of the multiple secret keys $K_0$, ..., $K_{N-1}$, by calculating multiple encrypted keys $K_{E0}$, ..., $K_{EN-1}$ according to:

$$K_{En} = Kn \text{ XOR } K_{Pn}, \text{ with } n = 0, ..., N-1. \qquad (2)$$

The multiple device-specific keys $K_{P0}$, ..., $K_{PN-1}$ may be generated by providing the PUF with different challenges $C_0$, ..., $C_{N-1}$, with each of the different challenges causing the PUF to provide a corresponding device-specific keys $K_{P0}$, ..., $K_{PN-1}$ as a response. Alternatively, the dedicated circuit part 120 may also be provided with multiple PUFs, each being used to provide a corresponding one of the multiple device-specific keys $K_{P0}$, ..., $K_{PN-1}$. In some scenarios, the utilization of multiple different challenges and the utilization of multiple PUFs could also be combined, e.g., by providing multiple different challenges to at least some of the multiple PUFs.

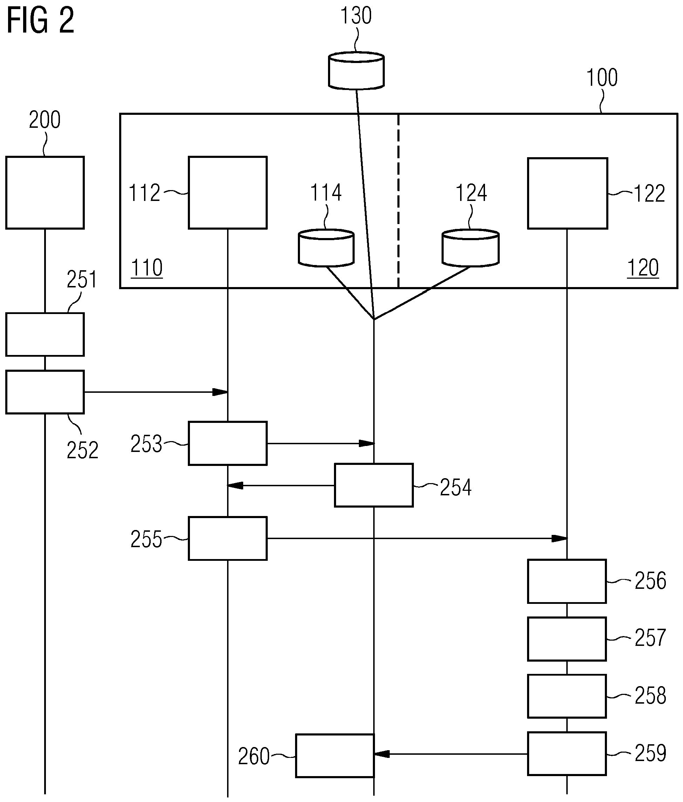

Fig. 2 schematically illustrates an example of processes for performing an update of the device 100, which was previously prepared by the processes of Fig. 2.

As illustrated by block 251, the update is initially encrypted by the secret key K, $K_0$, ..., $K_{N-1}$. The encrypted update and the IndexID of the secret key K, $K_0$, ..., $K_{N-1}$ are then provided to the device 100, as illustrated by block 252. In the example of Fig. 2, it is assumed that a server 200' encrypts the update and provides the encrypted update to the device 100. The server 200' may correspond to the server 200, which was also involved in the processes of Fig. 1, or may be different from the server 200. In the latter case, the server 200' needs to be provided with information on the secret K, $K_0$, ..., $K_{N-1}$ and the IndexID of the secret key, e.g., using a secure communication mechanism between the server 200 and the server 200'.

The processor-based part 110 of the device 100 receives the encrypted update and the IndexID and, as illustrated by block 253, then requests the challenge associated with the IndexID from the memory 114, 124, 130 where it was previously stored. As illustrated by block 254, the memory 114, 124, 130 storing the challenge then provides the challenge to the processor-based part 110 of the device 100. As illustrated by block 255, the programmable part 110 of the device 100 then provides the challenge and the encrypted update to the dedicated circuit part 120 of the device 100.

The dedicated circuit part 120 of the device 100 receives the challenge and the encrypted update. Based on the challenge, the PUF provided in the dedicated circuit part 120 of the device 100 reproduces the device-specific key $K_P$, $K_{P0}$, ..., $K_{PN-1}$.

As illustrated by block 256, the dedicated circuit part 120 of the device 100 then reconstructs the secret key K, $K_0$, ..., $K_{N-1}$ from the stored encrypted key $K_E$, $K_{E0}$, ..., $K_{EN-1}$. This is accomplished by calculating an XOR combination of the stored encrypted key $K_E$, $K_{E0}$, ..., $K_{EN-1}$ and the device-specific key $K_P$, $K_{P0}$, ..., $K_{PN-1}$. That is to say, the secure key is calculated from the encrypted key $K_E$, $K_{E0}$, ..., $K_{EN-1}$ according to:

$$K = K_E \text{ XOR } K_P = (K \text{ XOR } K_P) \text{ XOR } K_P \qquad (3)$$

or

$$K_n = K_{En} \text{ XOR } K_{Pn} \text{ with } n = 0, ..., N-1. \qquad (4)$$

As illustrated by block 258, the dedicated circuit part 120 of the device 100 then utilizes the reconstructed secret key K, to decrypt the encrypted update. Here, successful decryption of the update may be considered as a verification of integrity of the update. For example, an algorithm like AES-GCM (Advanced Encryption Standard Galois/Counter Mode) or other type of authenticated encryption algorithm may be used for encryption and authentication of the update. As illustrated by block 259, in response to successful decryption, the dedicated circuit part 120 of the device 100 then provides the decrypted update to the processor-based part 110 of the device 100. Here, the transfer of the decrypted update may implicitly indicate that the update was verified and found to be authentic. However, in some scenarios the dedicated circuit part 120 of the device 100 could also provide explicit information indicating the authentication result to the processor-based part 110, e.g., in terms of an indicator of authenticity or in terms of a fault indicator indicating failed authentication.

As illustrated by block 260, the processor-based part 110 of the device 100 may then proceed to installation of the update.

In some scenarios, the update may additionally be signed with a digital signature. In this case, the processor-based part 110 of the device 100 may verify the digital signature and thereby complement the authentication provided by decryption of the update by the dedicated circuit part of the device 100.

In the example of Figs. 1 and 2 it was assumed that the IndexID is used to identify the secret key K, $K_0$, ..., $K_{N-1}$, the challenge, and the encrypted key $K_E$, $K_{E0}$, ..., $K_{EN-1}$. However, in variants of the processes it would also be possible to store the challenge and/or the encrypted key $K_E$, $K_{E0}$, ..., $K_{EN-1}$ directly, without using the IndexID as an indirect reference. For example, the challenge could be used for identifying the stored encrypted key $K_E$, $K_{E0}$, ..., $K_{EN-1}$. Further, while the example of Figs. 1 and 2 it assumed that the PUF generates the device-specific key $K_P$, $K_{P0}$, ..., $K_{PN-1}$ as a response to the challenge, it would also be possible to use a PUF that does not require a challenge as input.

Further, while in the example of Figs. 1 and 2 it was assumed that the update is decrypted by the dedicated circuit part 120 of the device 100, it is noted that in some scenarios the decryption could also be performed by the processor-based part 110. In such, the dedicated circuit part 120 of the device 100 could provide the reconstructed secret key $K$, $K_0$, ..., $K_{N-1}$ to the processor-based part 110, so that the reconstructed secret key is temporarily available at the processor-based part 110 and can be used for decrypting the update.

Further, it is noted that while the example of Fig. 1 and 2 assumed that the secret key $K$, $K_0$, ..., $K_{N-1}$ is encrypted by calculating an XOR combination of the secret key $K$, $K_0$, ..., $K_{N-1}$ and the device-specific key $K_P$, $K_{P0}$, ..., $K_{PN-1}$, various other invertible cryptographic functions could be used as an alternative or in addition to encrypt the secret key $K$, $K_0$, ..., $K_{N-1}$. For example, the secret key $K$, $K_0$, ..., $K_{N-1}$ could be encrypted by calculating an invertible cryptographic function of the secret key $K$, $K_0$, ..., $K_{N-1}$ and the device-specific key $K_P$, $K_{P0}$, ..., $K_{PN-1}$, with the invertible cryptographic function being based on a block-cipher or a stream-cipher.

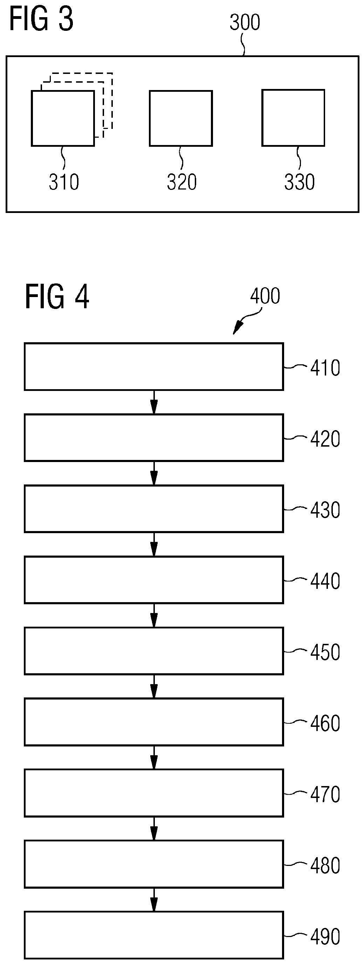

Fig. 3 schematically illustrates structures of the dedicated circuit part 120 of the device 100. In particular, Fig. 3 schematically illustrates circuitry 300 which may be implemented by the FPGA 122 or similar dedicated hardware circuitry.

As illustrated, the circuitry 300 includes the above-mentioned PUF, denoted by 310. As illustrated by broken lines, in some scenarios the circuitry could also include multiple PUFs, e.g., with the purpose of encrypting multiple secret keys as explained above. Further, the circuitry 300 may include the above-mentioned RNG, denoted by 320. The RNG 320 may for example be used for generating one or more challenges during the processes of Fig. 1. Further, the circuitry may include an encryption/decryption circuit 330. The encryption/decryption circuit 330 may be used for encrypting the secret key and reconstructing the secret key from the encrypted key. Further, in some scenarios the encryption/decryption circuit 330 may also be used for decrypting the update.

It is noted that in some scenarios at least some of the elements shown in Fig. 3 could also be implemented in the processor-based part of the device 100. By way of example, the PUFs 310 could also be implemented as a part of the processor 112.

Fig. 4 shows a flowchart for illustrating a method 400 which can be used for implementing the illustrated concepts in the above-mentioned device 100.

At block 410, the device 100 generates the device-specific key $K_P$, $K_{P0}$, ..., $K_{PN-1}$ by the at least one PUF 310 provided in the dedicated circuit part 120 of the device 100. As mentioned above, the PUF 310 may generate the device-specific key as a response to a challenge input. In some scenarios, the device 100 may also generate multiple device-specific keys, e.g., the above-mentioned device-specific keys $K_{P0}$, ..., $K_{PN-1}$. Here, the device 100 may utilize the same PUF, provided with different challenge inputs, to provide the multiple device-specific keys. Further, the device 100 may utilize multiple PUFs to generate at least some of the multiple device-specific keys.

If the device-specific key was generated as a response to a challenge input, the device 100 may store the challenge input at block 420. This may be accomplished in the device 100, e.g., in the memory 114 or 124, in the off-chip memory 130, or on a server, e.g., on the server 200. In some scenarios, the device 100 may store the challenge input in the memory 124 of the dedicated circuit part of the device 100 and stores an index referring to the stored challenge input, such as the above-mentioned IndexID, in the memory 114 of the processor-based part 110 of the device 100, in the off-chip memory 130, or on the server. In this way, it can be avoided that the challenge input itself is transferred.

At step 430, the device 100 encrypts the secret key $K$, $K_0$, ..., $K_{N-1}$ by calculating the invertible cryptographic function of the secret key $K$, $K_0$, ..., $K_{N-1}$ and the device-specific key $K_P$, $K_{P0}$, ..., $K_{PN-1}$ generated by the PUF(s) 310. Thereby, the device 100 generates the above-mentioned encrypted key(s) $K_E$, $K_{E0}$, ..., $K_{EN-1}$. For example, this may involve calculating the XOR combination of the secret key $K$, $K_0$, ..., $K_{N-1}$ and the device-specific key $K_P$, $K_{P0}$, ..., $K_{PN-1}$ generated by the PUF(s) 310 or by applying a more complex invertible cryptographic function, which uses the device specific key $K_P$, $K_{P0}$, ..., $K_{PN-1}$ for encrypting the secret key $K$, $K_0$, ..., $K_{N-1}$. Such more complex invertible cryptographic function could for example be based on a block-cipher or a stream-cipher.

At step 440, the device 100 stores the encrypted key $K_E$, $K_{E0}$, ..., $K_{EN-1}$. Again, this may be accomplished on the basis of an index referring to the stored encrypted key $K_E$, $K_{E0}$, ..., $K_{EN-1}$, such as the above-mentioned IndexID. The device 100 may store the encrypted key $K_E$, $K_{E0}$, ..., $K_{EN-1}$ in the memory 124 of the dedicated circuit part 120, in the memory 114 of the processor-based part 110, or in the off-chip memory 130.

At step 450, the device 100 receives an update encrypted by the secret key $K$, $K_0$, ..., $K_{N-1}$.

At step 460, the device 100 reconstructs the secret key $K$, $K_0$, ..., $K_{N-1}$ from the stored encrypted key $K_E$, $K_{E0}$, ..., $K_{EN-1}$. This is accomplished by utilizing the device-specific key $K_P$, $K_{P0}$, ..., $K_{PN-1}$ generated by the PUF(s) 310 to invert the cryptographic function of the secret key $K$, $K_0$, ..., $K_{N-1}$ and the device-specific key $K_P$, $K_{P0}$, ..., $K_{PN-1}$ calculated at block 430. For example, this may involve calculating the XOR combination of the stored encrypted key $K_E$, $K_{E0}$, ..., $K_{EN-1}$, and the corresponding device-specific key $K_P$, $K_{P0}$, ..., $K_{PN-1}$ generated by the PUF(s) 310.

At step 470, the device 100 decrypts the update with the reconstructed secret key K, $K_0$, ..., $K_{N-1}$. In some scenarios, the dedicated circuit part 120 of the device 100 may perform the decryption of the update.

At step 480, the dedicated circuit part 120 of the device 100 may verify integrity of the update. For example, in response to successfully decrypting the update, the dedicated circuit part 120 of the device 100 may assume that the update is authentic and provide a corresponding indication to the processor-based part 110 of the device 100. In some scenarios, this indication may also be provided in an implicit manner, by providing the decrypted update to the processor-based part 110 of the device 100.

If the update is signed with a digital signature, the processor-based part 110 of the device 100 may verify the digital signature at step 490. In this way, the processor-based part may provide a further check of integrity and/or authenticity.

As can be seen, the exemplary concepts as illustrated above may be utilized for managing device updates in a secure and efficient manner. In particular, a secret key, which may be used for symmetric encryption and/or be shared with other devices from the same series or some other group, can be stored in a secured manner in the device, using encryption by the device-specific key generated by the PUF. Accordingly, the secret key can be protected even if an attacker gains access to the encrypted key stored in the device. Further, the concepts can be implemented with low complexity, utilizing a symmetric cryptographic mechanism. The secret key can be generated externally. However, the secret key could also be generated on the device 100, e.g., by the processor-based part 110.

It is to be understood that the above description of examples is intended to be illustrative and that the illustrated concepts are susceptible to various modifications. For example, the illustrated concepts could be applied to various types of devices, without limitation to embedded devices or SoCs. Further, the concepts may be combined with various cryptographic algorithms and circuit technologies. Further, the concepts may be applied for securing various types of updates, without limitation to the above-mentioned examples of a software update, firmware update or configuration update.

**Claims**

1. A device (100), the device (100) being configured to:

   - provide a physical unclonable function (310), PUF, in the device (100),
   - generate a device-specific key ($K_P$) by the PUF (310),
   - encrypt a secret key (K) by calculating an invertible cryptographic function of the secret key (K) and the device-specific key ($K_P$) generated by the PUF (310),
   - store the encrypted secret key (K),
   - receive an update encrypted with the secret key (K),
   - reconstruct the secret key (K) from the stored encrypted secret key (K) by utilizing the device-specific key ($K_P$) generated by the PUF (310) to invert the cryptographic function of the secret key (K) and the device-specific key ($K_P$), and
   - decrypt the update with the reconstructed secret key (K).

2. The device (100) according to claim 1,
   wherein the PUF (310) is configured to provide the device-specific key as a response to a challenge input, and
   wherein the device (100) is configured to store the challenge input in the device (100), in a separate memory (130), or on a server (200, 200').

3. The device (100) according to claim 1 or 2,
   wherein the device (100) is configured to:

   - store the challenge input in a memory (124) of a dedicated circuit part (120) of the device (100), and
   - store an index referring to the stored challenge input in a further memory (114) of the processor-based part (110) of the device (100), in a separate memory (130), or on a server (200, 200').

4. The device (100) according to any one of the preceding claims,
   wherein the PUF (310) is configured to generate a plurality of device-specific keys ($K_{P0}$, $K_{P1}$, ..., $K_{PN-1}$) in response to receiving a corresponding different challenge inputs ($C_0$, $C_1$, ..., $C_{N-1}$), for encrypting a corresponding one of a plurality of secret keys ($K_0$, $K_1$, ..., $K_{N-1}$) by calculating an invertible cryptographic function of the secret key ($K_0$, $K_1$, ..., $K_{N-1}$) and the device-specific key ($K_{P0}$, $K_{P1}$, ..., $K_{PN-1}$).

**5.** The device (100) according to any one of the preceding claims,
wherein the device (100) is configured to provide a plurality of PUFs (310), each for encrypting a corresponding one of a plurality of secret keys ($K_0$, $K_1$, ..., $K_{N-1}$) by calculating an invertible cryptographic function of the secret key ($K_0$, $K_1$, ..., $K_{N-1}$) and a corresponding device-specific key ($K_{P0}$, $K_{P1}$, ..., $K_{PN-1}$) generated by the PUF (310).

**6.** The device (100) according to any one of the preceding claims,
wherein the dedicated circuit part (120) of the device (100) is configured to decrypt the update with the reconstructed secret key (K).

**7.** The device (100) according to any one of the preceding claims,
wherein a dedicated circuit part (120) of the device (100) is configured to verify integrity of the update.

**8.** The device (100) according to any one of the preceding claims,
wherein the update is signed with a digital signature and a processor-based part (110) of the device (100) is configured to verify the digital signature, and/or
wherein the update is authenticated with a message authentication code or an authenticated encryption algorithm.

**9.** A method of updating a device (100), the method comprising:

- generating a device-specific key ($K_P$) by a physical unclonable function (310), PUF, provided in the device (100),
- encrypting a secret key (K) by calculating an invertible cryptographic function of the secret key (K) and the device-specific key ($K_P$) generated by the PUF (310),
- storing the encrypted secret key (K),
- receiving an update encrypted by the secret key (K),
- reconstructing the secret key (K) from the stored encrypted secret key (K) by utilizing the device-specific key ($K_P$) generated by the PUF (310) to invert the cryptographic function of the secret key (K) and the device-specific key ($K_P$), and
- decrypting the update with the reconstructed secret key (K).

**10.** The method according to claim 9,
wherein the PUF (310) provides the device-specific key as a response to a challenge input, and
wherein the challenge input is stored in the device (100) or on a server (200, 200').

**11.** The method according to claim 9 or 10, comprising:

- storing the challenge input in a memory (124) of a dedicated circuit part (120) of the device (100), and
- storing an index referring to the stored challenge input in a further memory (114) of a processor-based part (110) of the device (100), in a separate memory (130), or on a server (200, 200').

**12.** The method according to any one of claims 9 to 11,
wherein the PUF (310) generates a plurality of device-specific keys ($K_{P0}$, $K_{P1}$, ..., $K_{PN-1}$) in response to receiving a corresponding different challenge inputs ($C_0$, $C_1$, ..., $C_{N-1}$), for encrypting a corresponding one of a plurality of secret keys ($K_0$, $K_1$, ..., $K_{N-1}$) by calculating an invertible cryptographic function of the secret key ($K_0$, $K_1$, ..., $K_{N-1}$) and the device-specific key ($K_{P0}$, $K_{P1}$, ..., $K_{PN-1}$).

**13.** The method according to any one of claims 9 to 12, comprising:

- providing a plurality of PUFs (310) in the device (100), each for encrypting a corresponding one of a plurality of secret keys ($K_0$, $K_1$, ..., $K_{N-1}$) by calculating an invertible cryptographic function of the secret key ($K_0$, $K_1$, ..., $K_{N-1}$) and a corresponding device-specific key ($K_{P0}$, $K_{P1}$, ..., $K_{PN-1}$) generated by the PUF (310).

**14.** The method according to any one claims 9 to 13, comprising:

- a dedicated circuit part (120) of the device (100) decrypting the update with the reconstructed secret key (K), and/or
- a dedicated circuit part (120) of the device (100) verifying integrity of the update.

**15.** The method according to any one of claims 9 to 14,

wherein the update is signed with a digital signature and a processor-based part (110) of the device (100) verifies the digital signature, and/or
wherein the update is authenticated with a message authentication code or an authenticated encryption algorithm.

**Amended claims in accordance with Rule 137(2) EPC.**

1. A device (100), the device (100) being configured to:

   - provide a physical unclonable function (310), PUF, in the device (100),
   - generate a device-specific key ($K_P$) by the PUF (310), wherein the PUF (310) is configured to generate a plurality of device-specific keys ($K_{P0}$, $K_{P1}$, ..., $K_{PN-1}$) in response to receiving a corresponding different challenge inputs ($C_0$, $C_1$, ..., $C_{N-1}$), for encrypting a corresponding one of a plurality of secret keys ($K_0$, $K_1$, ..., $K_{N-1}$) by calculating an invertible cryptographic function of the secret key ($K_0$, $K_1$, ..., $K_{N-1}$) and the device-specific key ($K_{P0}$, $K_{P1}$, ..., $K_{PN-1}$), - encrypt a secret key ($K$) by calculating an invertible cryptographic function of the secret key ($K$) and the device-specific key ($K_P$) generated by the PUF (310),
   - store the encrypted secret key ($K$),
   - receive an update encrypted with the secret key ($K$),
   - reconstruct the secret key ($K$) from the stored encrypted secret key ($K$) by utilizing the device-specific key ($K_P$) generated by the PUF (310) to invert the cryptographic function of the secret key ($K$) and the device-specific key ($K_P$), and
   - decrypt the update with the reconstructed secret key ($K$).

2. The device (100) according to claim 1,
   wherein the PUF (310) is configured to provide the device-specific key as a response to a challenge input, and
   wherein the device (100) is configured to store the challenge input in the device (100), in a separate memory (130), or on a server (200, 200').

3. The device (100) according to claim 1 or 2,
   wherein the device (100) is configured to:

   - store the challenge input in a memory (124) of a dedicated circuit part (120) of the device (100), and
   - store an index referring to the stored challenge input in a further memory (114) of the processor-based part (110) of the device (100), in a separate memory (130), or on a server (200, 200').

4. The device (100) according to any one of the preceding claims,
   wherein the device (100) is configured to provide a plurality of PUFs (310), each for encrypting a corresponding one of a plurality of secret keys ($K_0$, $K_1$, ..., $K_{N-1}$) by calculating an invertible cryptographic function of the secret key ($K_0$, $K_1$, ..., $K_{N-1}$) and a corresponding device-specific key ($K_{P0}$, $K_{P1}$, ..., $K_{PN-1}$) generated by the PUF (310) .

5. The device (100) according to any one of the preceding claims,
   wherein the dedicated circuit part (120) of the device (100) is configured to decrypt the update with the reconstructed secret key ($K$).

6. The device (100) according to any one of the preceding claims,
   wherein a dedicated circuit part (120) of the device (100) is configured to verify integrity of the update.

7. The device (100) according to any one of the preceding claims,
   wherein the update is signed with a digital signature and a processor-based part (110) of the device (100) is configured to verify the digital signature, and/or
   wherein the update is authenticated with a message authentication code or an authenticated encryption algorithm.

8. A method of updating a device (100), the method comprising:

   - generating a device-specific key (Kp) by a physical unclonable function (310), PUF, provided in the device (100),

   wherein the PUF (310) generates a plurality of device-specific keys ($K_{P0}$, $K_{P1}$, ..., $K_{PN-1}$) in response to receiving a corresponding different challenge inputs ($C_0$, $C_1$, ..., $C_{N-1}$), for encrypting a corresponding one of a plurality of secret

keys ($K_0$, $K_1$, ..., $K_{N-1}$) by calculating an invertible cryptographic function of the secret key ($K_0$, $K_1$, ..., $K_{N-1}$) and the device-specific key ($K_{P0}$, $K_{P1}$, ..., $K_{PN-1}$),

- encrypting a secret key (K) by calculating an invertible cryptographic function of the secret key (K) and the device-specific key ($K_P$) generated by the PUF (310),
- storing the encrypted secret key (K),
- receiving an update encrypted by the secret key (K),
- reconstructing the secret key (K) from the stored encrypted secret key (K) by utilizing the device-specific key (Kp) generated by the PUF (310) to invert the cryptographic function of the secret key (K) and the device-specific key (Kp), and
- decrypting the update with the reconstructed secret key (K) .

9. The method according to claim 8,
   wherein the PUF (310) provides the device-specific key as a response to a challenge input, and
   wherein the challenge input is stored in the device (100) or on a server (200, 200').

10. The method according to claim 8 or 9, comprising:

    - storing the challenge input in a memory (124) of a dedicated circuit part (120) of the device (100), and
    - storing an index referring to the stored challenge input in a further memory (114) of a processor-based part (110) of the device (100), in a separate memory (130), or on a server (200, 200').

11. The method according to any one of claims 8 to 10, comprising:

    - providing a plurality of PUFs (310) in the device (100), each for encrypting a corresponding one of a plurality of secret keys ($K_0$, $K_1$, ..., $K_{N-1}$) by calculating an invertible cryptographic function of the secret key ($K_0$, $K_1$, ..., $K_{N-1}$) and a corresponding device-specific key ($K_{P0}$, $K_{P1}$, ..., $K_{PN-1}$) generated by the PUF (310).

12. The method according to any one claims 8 to 11, comprising:

    - a dedicated circuit part (120) of the device (100) decrypting the update with the reconstructed secret key (K), and/or
    - a dedicated circuit part (120) of the device (100) verifying integrity of the update.

13. The method according to any one of claims 8 to 12, wherein the update is signed with a digital signature and a processor-based part (110) of the device (100) verifies the digital signature, and/or
    wherein the update is authenticated with a message authentication code or an authenticated encryption algorithm.

FIG 1

FIG 2

## FIG 3

300

310    320    330

## FIG 4

400

410

420

430

440

450

460

470

480

490

Europäisches
Patentamt

European
Patent Office

Office européen
des brevets

**EUROPEAN SEARCH REPORT**

Application Number

EP 19 15 6421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRADA-DELGADO M A ET AL: "Trustworthy firmware update for Internet-of-Thing Devices using physical unclonable functions", 2017 GLOBAL INTERNET OF THINGS SUMMIT (GIOTS), IEEE, 6 June 2017 (2017-06-06), pages 1-5, XP033145249, DOI: 10.1109/GIOTS.2017.8016282 [retrieved on 2017-08-23] * abstract * * Chapter I. "Introduction"; page 1 * * Chapter III. "PUF-Based Obfuscation"; page 2 * * Chapter IV. "Trustworthy Communication"; page 2, right-hand column - page 3, right-hand column * | 1-15 | INV. H04L9/32 |
| X | HUTH CHRISTOPHER ET AL: "Secure software update and IP protection for untrusted devices in the Internet of Things via physically unclonable functions", 2016 IEEE INTERNATIONAL CONFERENCE ON PERVASIVE COMPUTING AND COMMUNICATION WORKSHOPS (PERCOM WORKSHOPS), IEEE, 14 March 2016 (2016-03-14), pages 1-6, XP032893771, DOI: 10.1109/PERCOMW.2016.7457156 [retrieved on 2016-04-19] * abstract * * Chapter III. "Preliminaries"; page 2, right-hand column - page 3, right-hand column * * Chapter IV. "Proposed Security Protocol"; page 3, right-hand column - page 4, right-hand column * | 1-15 | TECHNICAL FIELDS SEARCHED (IPC) H04L |

-/--

The present search report has been drawn up for all claims

| Place of search | Date of completion of the search | Examiner |
|---|---|---|
| Munich | 19 July 2019 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 15 6421

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/178597 A1 (UNIV SOONGSIL RES CONSORTIUM [KR]) 26 November 2015 (2015-11-26) * abstract * * Summary of the Invention * ----- | 1-15 | |
| A | EP 3 214 567 A1 (SIEMENS AG [DE]) 6 September 2017 (2017-09-06) * abstract * * paragraphs [0007] - [0032] * ----- | 1-15 | |

TECHNICAL FIELDS
SEARCHED        (IPC)

The present search report has been drawn up for all claims

| Place of search | Date of completion of the search | Examiner |
|---|---|---|
| Munich | 19 July 2019 | Di Felice, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 6421

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2019

| Patent document cited in search report | | Publication date | Patent family member(s) | Publication date |
|---|---|---|---|---|
| WO 2015178597 | A1 | 26-11-2015 | NONE | |
| EP 3214567 | A1 | 06-09-2017 | NONE | |

EPO FORM P0459

For more details about this annex : see Official Journal of the European Patent Office, No. 12/82